# EUROPEAN PATENT APPLICATION

(11) **EP 3 493 397 A1**
(43) Date of publication of application: **05.06.2019**
(21) Application number: 18209118.1
(22) Date of filing: 29.11.2018
(51) Int. Cl.: H02S 20/30, H02S 20/23, F24S 25/61, F24S 25/70

(54) **DEVICE FOR MOUNTING SOLAR PANELS**

(30) Priority: 29.11.2017 BE 201705864
(71) Applicant: Allimex, 3550 Heusden-Zolder (BE)
(72) Inventor: Clerckx, Klaas, 3550 Heusden-Zolder (BE)
(74) Representative: Gevers Patents

(57) **Abstract**

The invention provides a device (100) for mounting solar panels to a base. The device (100) comprises a lower part (200) and an upper part (300). The lower part (200) is arranged for mounting the device (100) to the base. The upper part (300) comprises a main body (330) and a mounting element (310). The main body (330) is connected to the lower part (200). The mounting element (310) is arranged for mounting solar panels to the device (100). The mounting element (310) is rotatably mounted onto the main body (330).

## Description

### Technical field

The present invention relates to a device and method for mounting solar panels to a base, such as a roof.

### Background art

A device for mounting solar panels to a base, such as a roof, is for instance known from WO 2006/101392 A2. Such a device comprises a lower part and an upper part. The lower part is arranged for mounting the device to the roof by means of a hook-shaped body to be slid over a supporting beam of the roof and the roof tile supported thereon. The upper part comprises a main body connected to the lower part. Furthermore, the lower part comprises a U-shaped mounting element arranged for receiving a mounting profile for mounting solar panels thereto. This device has the disadvantage that the mounting element is oriented according to a fixed direction, so that solar panels can be mounted to it according to the fixed direction. Mounting solar panels to the base in another direction then requires a device in which the mounting element is oriented according to the other direction.

### Disclosure of the invention

The present invention aims to provide a device for mounting solar panels to a base in which the direction for mounting the solar panels is adjustable.

This aim is achieved by means of the device according to the first independent claim.

To this end, the present invention provides a device for mounting solar panels to a base. The device comprises a lower part and an upper part. The lower part is arranged for mounting the device to the base. The upper part comprises a main body and a mounting element. The main body is connected to the lower part. The mounting element is arranged for mounting solar panels to the device. The mounting element is rotatably mounted onto the main body. Preferably, the mounting element is rotatable on the main body between at least two positions allowing solar panels to be mounted to it. Preferably, the mounting element is rotatable on the main body so that the mounting element, in every position taken up by the mounting element during rotation, allows solar panels to be mounted to it. Preferably, the mounting element is rotatable about a predetermined rotational axis. Preferably, the mounting element is at least rotatable about a full circle.

The mounting element being rotatable on the main body of the upper part offers the advantage that the position of the mounting element can be quickly and easily adjusted to the direction according to which solar panels will be mounted to the base by means of the device.

The mounting element can be arranged for directly mounting solar panels thereto. However, the mounting element can also be arranged for indirectly mounting solar panels thereto by means of an intermediate element, such as for instance a mounting profile. In this case, the mounting element is then preferably U-shaped for receiving the mounting profile therein.

In an embodiment of the device according to the present invention, the upper part comprises a releasable connecting element for securing the mounting element in relation to the main body.

The connecting element offers the advantage that, when the mounting element has been rotated into the correct position for mounting solar panels thereto according to the desired direction, the mounting element can then be secured in the respective position. Accidental rotation of the mounting element is hereby avoided, which is advantageous for the safe use of the device according to an embodiment of the present invention.

In an embodiment of the device according to the present invention, the mounting element provides a first engagement surface. The main body provides a second engagement surface opposite the first engagement surface. The first engagement surface and the second engagement surface are arranged for mutually engaging the first engagement surface and the second engagement surface according to a first direction. The first engagement surface and the second engagement surface are further arranged for mutually engaging the first engagement surface and the second engagement surface according to a second direction. The second direction differs from the first direction. In a further embodiment of this embodiment of the device according to the present invention, the first engagement surface and the second engagement surface are further arranged for mutually engaging the first engagement surface and the second engagement surface according to at least one additional direction. The at least one additional direction differs from the first direction and the second direction.

The first engagement surface and second engagement surface thus provided offer the advantage that a number of predetermined directions are determined according to which solar panels can be mounted to the base by means of the device according to the present invention. The first engagement surface and the second engagement surface being able to mutually engage according to these different predetermined directions allows the corresponding position of the mounting element during rotation of the mounting element to be quickly found. This allows a quick and easy mounting of the solar panels to the base according to the desired direction.

It should be clear that the first engagement surface and the second engagement surface can be arranged in different ways to mutually engage according to different directions. This may for instance be achieved by providing the first engagement surface and the second engagement surface with corresponding recesses and protrusions which are shaped as a regular polygon. Another possibility is further discussed in the embodiment of the device according to the present invention mentioned below.

In an embodiment of the device according to the present invention, one engagement surface among the first engagement surface and the second engagement surface comprises a first series of parallel grooves extending according to the first direction and a second series of parallel grooves extending according to the second direction. Preferably, the grooves of the first series of grooves and the grooves of the second series of grooves cross each other. The other engagement surface among the first engagement surface and the second engagement surface comprises a third series of parallel protrusions extending according to a predetermined direction. Preferably, the grooves in the first series are spaced a predetermined distance apart, the grooves in the second series are spaced the predetermined distance apart, and the protrusions in the third series are spaced the predetermined distance apart.

The inventors have found that by means of this embodiment, the first engagement surface and the second engagement surface can be arranged in an easy manner for mutually engaging the first engagement surface and the second engagement surface according to the first direction or according to the second direction. The engagement of the first engagement surface and the second engagement surface according to the first direction is then simply achieved by orienting the protrusions of the third series of protrusions with the grooves of the first series of grooves during rotation of the mounting element. Mutually engaging the first engagement surface and the second engagement surface according to the second direction is then simply achieved by orienting the protrusions of the third series of protrusions with the grooves of the second series of grooves during rotation of the mounting element.

In an embodiment of the device according to the present invention, the first direction and the second direction are perpendicular to each other.

This embodiment is advantageous for providing a device for mounting solar panels to an inclined roof or surface as a base, wherein solar panels can be mounted according to a downward sloping direction of the inclined roof or surface, or wherein solar panels can be mounted according to a direction transversal to the downward sloping direction of the inclined roof or surface. This may for instance be achieved by affixing mounting profiles for solar panels to the device according to the downward sloping direction of the roof, or by affixing mounting profiles for solar panels to the device according to the direction transversal to the downward sloping direction of the roof.

In an embodiment of the device according to the present invention, the mounting element comprises a separate first engaging element. The first engaging element is attached to the remaining portion of the mounting element. The first engagement surface is provided on the first engaging element. In an embodiment of the device according to the present invention, the main body comprises a separate second engaging element. The second engaging element is attached to the remaining portion of the main body. The second engagement surface is provided on the second engaging element.

Providing a separate first engaging element offers the advantage that for the first engaging element, different material properties can be chosen from those chosen for the remaining portion of the mounting element, wherein the material properties of the first engaging element may then among others be chosen for serving the function of the engagement of the first engagement surface and the second engagement surface, and wherein the material properties of the remaining portion of the mounting element may then among others be chosen for providing sturdiness to the device.

Providing a separate first engaging element also offers the advantage that for the first engaging element, a different method for manufacturing it can be chosen than the method for manufacturing the remaining portion of the mounting element, wherein the method for manufacturing the first engaging element may then among others be chosen for providing the required features to the first engagement surface for mutually engaging the first engagement surface and the second engagement surface.

Providing a separate second engaging element offers the advantage that for the second engaging element, different material properties can be chosen from those chosen for the remaining portion of the main body, wherein the material properties of the second engaging element may then among others be chosen for serving the function of the engagement of the first engagement surface and the second engagement surface, and wherein the material properties of the remaining portion of the main body may then among others be chosen for providing sturdiness to the device.

Providing a separate second engaging element also offers the advantage that for the second engaging element, a different method for manufacturing it can be chosen than the method for manufacturing the remaining portion of the main body, wherein the method for manufacturing the second engaging element may then among others be chosen for providing the required features to the second engagement surface for mutually engaging the first engagement surface and the second engagement surface.

In an embodiment of the device according to the present invention, one engagement surface among the first engagement surface and the second engagement surface has a lower hardness than the other engagement surface among the first engagement surface and the second engagement surface. Preferably, the one engagement surface among the first engagement surface and the second engagement surface having the lower hardness comprises a plastic, and more preferably a sliding plastic, which is advantageous for allowing the first engagement surface and the second engagement surface to slide over each other during rotation of the mounting element. Preferably, the other engagement surface among the first engagement surface and the second engagement surface having the higher hardness comprises a metal, and more preferably aluminium.

The mutually different hardness of the first engagement surface and the second engagement surface is advantageous for enabling a strong mutual engagement of the first engagement surface and the second engagement surface, and also for securing the mounting element in relation to the main body, because the one engagement surface among the first engagement surface and the second engagement surface having the higher hardness can be pressed into the other engagement surface among the first engagement surface and the second engagement surface having the lower hardness.

Furthermore, the present invention also provides a method for mounting solar panels to a base by means of the device according to the present invention. The method comprises the step of mounting the device to the base by means of the lower part. The method comprises the step of rotating the mounting element on the main body to a predetermined direction for mounting the solar panels. The method comprises the step of mounting a solar panel to the mounting element.

### Brief description of the drawings

The invention will hereafter be further elucidated in detail with reference to the following description and the appended drawings.
Figure 1 shows a side view of the device according to an embodiment of the present invention.
Figure 2 shows a front view of the device of Figure 1.
Figure 3 shows a rear view of the device of Figure 1.
Figure 4 shows a perspective view of the device of Figure 1 with the mounting element rotated according to a first direction.
Figure 5 shows a perspective view of the device of Figure 1 with a mounting element rotated according to a second direction.
Figure 6 shows the first engagement surface of the device of Figure 1.
Figure 7 shows the second engagement surface of the device of Figure 1.

### Modes for carrying out the invention

The present invention will be hereafter described with respect to particular embodiments and with reference to certain drawings, but the invention is not limited thereto and is only defined by the claims. The drawings shown are only schematic depictions and are non-limiting. In the drawings, the size of certain elements may be exaggerated, meaning that they are not drawn to scale and are merely for illustrative purposes. The dimensions and relative dimensions do not necessarily correspond to the actual reductions to practice of the invention.

Furthermore, terms such as "first", "second", "third" and the like are used in the description and in the claims for distinguishing between similar elements and not necessarily for describing a sequential or chronological order. The terms in question are interchangeable under appropriate circumstances and the embodiments of the invention can operate in other sequences than described or illustrated herein.

Moreover, terms such as "top", "bottom", "over", "under" and the like are used in the description and the claims for descriptive purposes and not necessarily for describing relative positions. The terms so used are interchangeable under appropriate circumstances and the embodiments of the invention can operate in other orientations than described or illustrated herein.

The term "comprising" and derivative terms, as used in the claims, should not be interpreted as being restricted to the means listed thereafter; the term does not exclude other elements or steps. It should to be interpreted as specifying the presence of the stated features, integers, steps or components as referred to, without, however, precluding the presence or addition of one or more other features, integers, steps or components, or groups thereof. Thus, the scope of the expression "a device comprising means A and B" is not limited to devices consisting only of components A and B. What is meant is that with respect to the present invention, the only relevant components of the device are A and B.

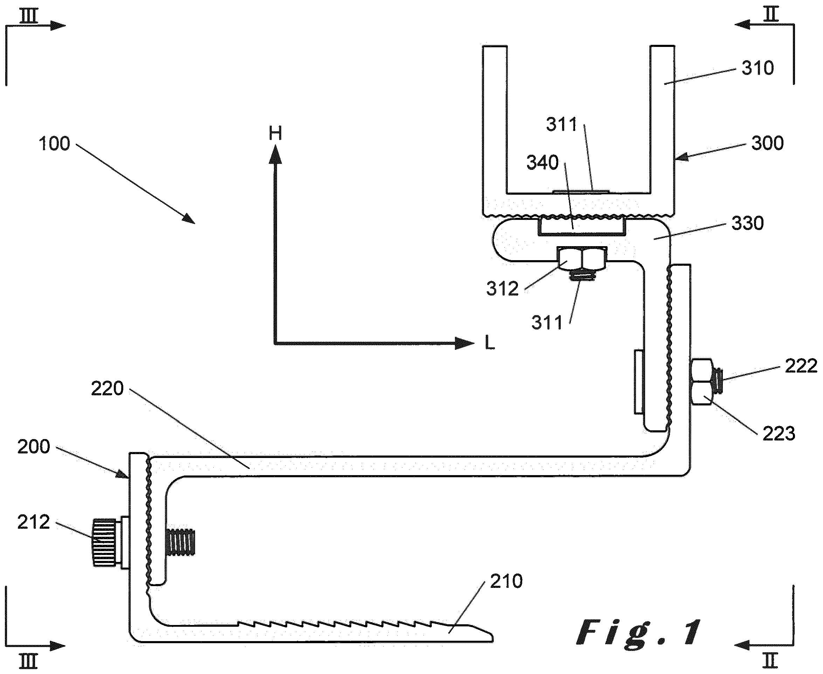

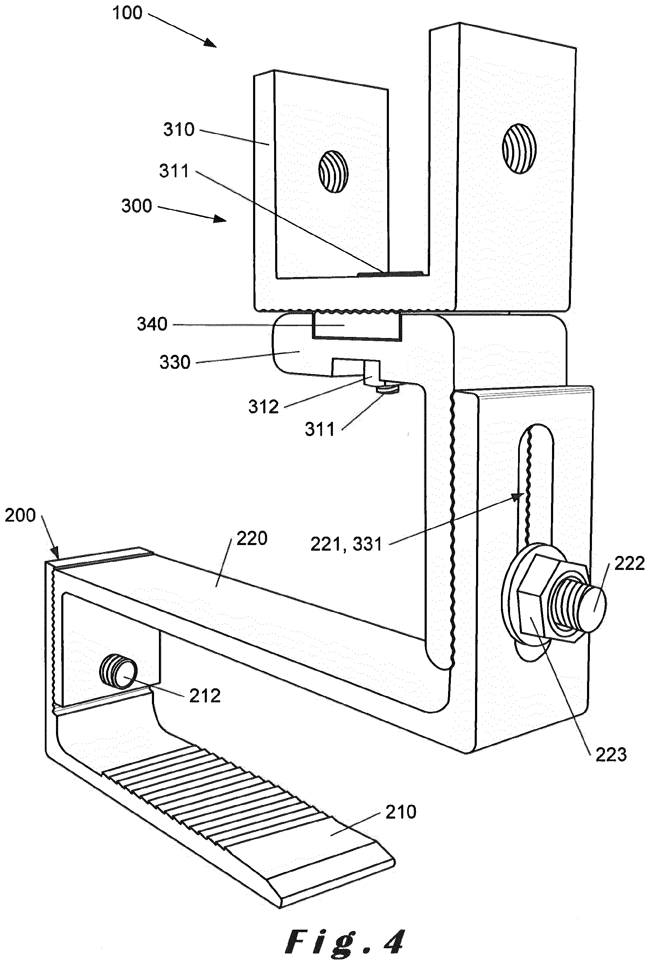

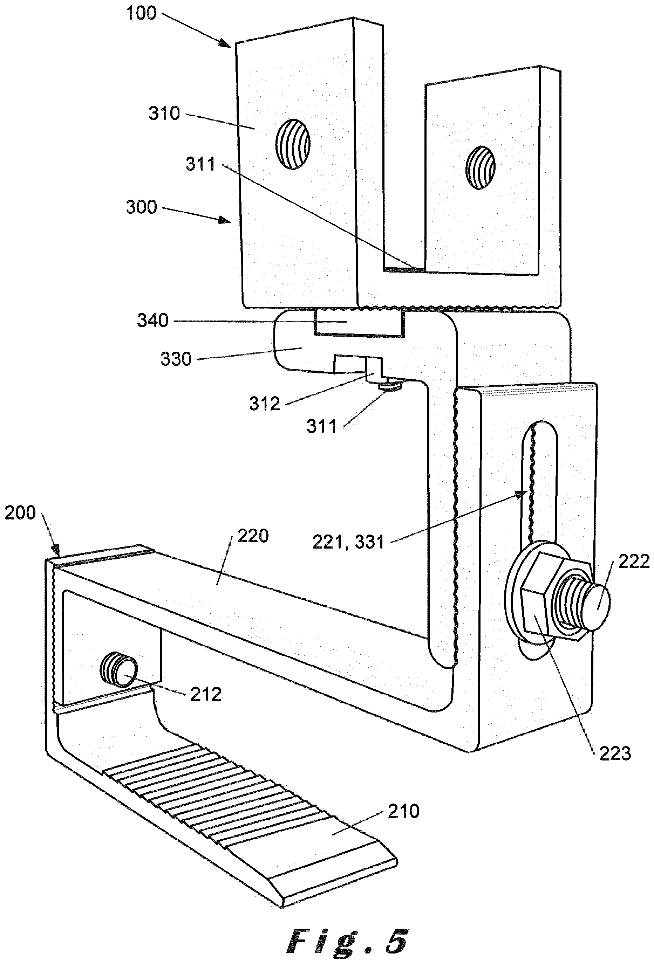

Figures 1-3 show a device 100 according to an embodiment of the present invention in a side view, a front view and a rear view, respectively. Figures 4 and 5 show this device 100 in a perspective view in two different usage configurations of the device 100. The device 100 shown is intended for mounting solar panels to a base, such as for instance a slanting roof with roof tiles or other roof covering elements arranged onto supporting beams of a supporting roof structure.

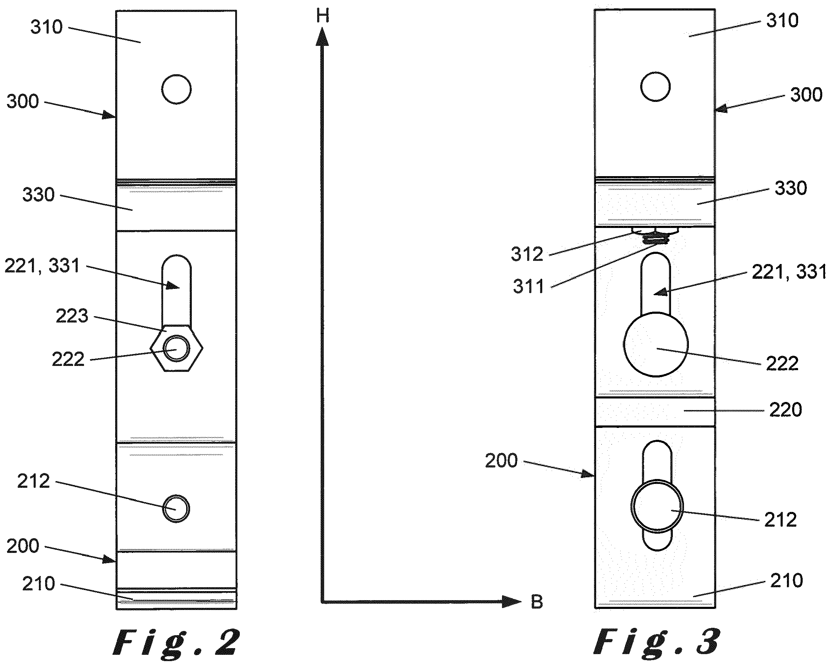

The device 100 comprises a hook-shaped lower part 200 arranged for mounting the device 100 to the roof. The lower part 200 comprises a first lower part portion 210 and a second lower part portion 220, which are connected to each other by means of a bolt 212 screwed through an opening arranged for that purpose through the second lower part portion 220. The first lower part portion 210 is slidable in relation to the second lower part portion 220 as a result of the fact that, as shown in Figure 3, the bolt 212 is arranged in the first lower part portion 210 through an elongated slot 211 in which the bolt 212 can move up and down if the bolt 212 does not mutually secure the first lower part portion 210 and the second lower part portion 220.

For mounting the device 100 to the roof, the hook shape of the lower part is used, by sliding the first lower part portion 210 underneath a supporting beam of the supporting roof structure and sliding the second lower part portion 220 over the roof covering element arranged onto the respective supporting beam. Here, the height of the hook shape of the lower part 200 can be adjusted to the thickness of the supporting beam and the roof covering element by sliding the first lower part portion 210 in relation to the second lower part portion 220.

Furthermore, the device 100 comprises an upper part 300 which is arranged, by means of a U-shaped mounting element 310, for mounting solar panels to the device 100. The upper part 300 further comprises a main body 330 by means of which the upper part 300 is connected to the lower part 200. The connection between the lower part 200 and the upper part 300 is realised by means of a bolt 222 and a nut 223 arranged in slots 221, 331 provided for that purpose in the second lower part portion and the main body 330, as shown in Figure 2. Here, the upper part 300 is slidable in its height direction in relation to the lower part 200 as a result of the fact that the bolt 222 can move up and down in the slots 221, 331. In this manner, the distance between the roof and solar panels mounted to the roof my means of the device 100 can be set.

The U-shaped mounting element 310 is rotatably mounted onto the main body 330 with the opening of the U-shape facing upwards so that a mounting profile for mounting solar panels can always be slid into the mounting element 310 from the top. The mounting element 310 is rotatably mounted onto the main body 330 by means of a bolt 311 and a nut 312, wherein the bolt 311 is arranged through openings 313, 332 provided for that purpose in the mounting element 310.

In this arrangement, mounting element 310 is unrestrictedly rotatable over a full circle around the bolt 311, so that the mounting element 310 may be positioned according to any direction around the bolt 311, and be secured in that position by tightening the nut 312 onto the bolt 311.

The upper part 300 of the device according to the embodiment shown is however further arranged for orienting the mounting element 310 according to a first preferred direction R1, as shown in Figure 4, and a second preferred direction R2, as shown in Figure 5. With the mounting element 310 oriented according to the first direction R1, mounting profiles for mounting solar panels can be arranged in the mounting element 310 in such a way that the mounting profiles extend according to the direction transversal to the downward sloping direction of the roof, in other words: the horizontal direction. With the mounting element 310 oriented according to the first direction R2, mounting profiles for mounting solar panels can be arranged in the mounting element 310 in such a way that the mounting profiles extend according to the downward sloping direction of the roof.

For orienting the mounting element 310 according to the first direction R1 and the second direction R2, the mounting element 310 is provided with a first engagement surface 320 and the main body 330 is provided with a second engagement surface 350. The first engagement surface 320 and the second engagement surface 350 face each other when the mounting element 310 is mounted onto the main body 330. The first engagement surface 320 and the second engagement surface 350 are further arranged in such a way that the first engagement surface 320 and the second engagement surface 350 can mutually engage according to both the first direction R1 and the second direction R2 during rotation of the mounting element 310 in relation to the main body 330.

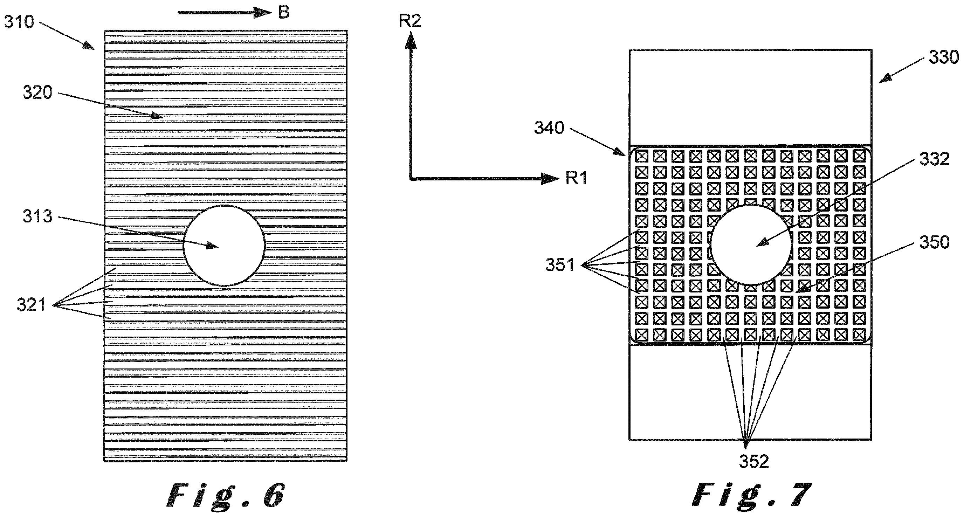

To this purpose, the first engagement surface 320, as shown in Figure 6, is provided with a series of protrusions 321, extending along the width direction B of the mounting element 310, and spaced at a fixed distance to each other. The second engagement surface 350, on the other hand, as shown in Figure 7, is provided with a first series of grooves 351 extending along the first direction R1 and a second series of grooves 352 extending along the second direction R2. Both the grooves 351 of the first series of grooves 351 and the grooves 352 of the second series of grooves 352 are at the same distance to each other as the distance between the protrusions 321 of the first engagement surface 320. The shape of the protrusions 321 of the first engagement surface 320 is complementary to the shape of the grooves 351 of the first series of grooves 351 of the second engagement surface 350, and complementary to the shape of the grooves 352 of the second series of grooves 352 of the second engagement surface 350. As such, the protrusions 321 of the first engagement surface 320 will align with the grooves 351, 352 of the first series of grooves 351 or the second series of grooves 352 and slide into them when the mounting element 310, during rotation, is oriented according to the first direction R1 or the second direction R2, respectively. As a result, the user of the device 100 can quickly and without adjustments find the correct orientation of the mounting element 310 according to the first direction R1 or the first direction R2.

In the embodiment shown, the second engagement surface 350 is arranged on a separate engaging element 340 of the main body 330. This allows among others most components of the device 100, such as the first lower part portion 210, the second lower part portion 220, the mounting element 310 and the main body 330, to be manufactured from a metal such as aluminium by means of extrusion. The engaging element 340 can then be manufactured in a different way, as the engaging element 340, because of the crossing first series of grooves 351 and second series of grooves 352, is less suited for being manufactured by means of extrusion without further treatment.

The separate engaging element 340 also allows different types of the device 100 to be provided, wherein the mounting element 310 can be oriented according to different directions for every type. Here, the components of the device 100 can then be jointly manufactured, except for a modified engaging element 340 for each type of the device 100.

**References**

| | | | |
|---|---|---|---|
| 100 | device | 224 | opening |
| 200 | lower part | 300 | upper part |
| 210 | first lower part portion | 310 | mounting element |
| 211 | slot | 311 | bolt |
| 212 | bolt | 312 | nut |
| 220 | second lower part portion | 313 | opening |
| 221 | slot | 320 | first engagement surface |
| 222 | bolt | 321 | series of protrusions |
| 223 | nut | 330 | main body |
| 331 | slot | R1 | first direction |
| 332 | opening | R2 | second direction |
| 340 | engaging element | L | length direction |
| 350 | second engagement surface | B | width direction |
| 351 | first series of grooves | H | height direction |
| 352 | second series of grooves | | |

## Claims

1. A device (100) for mounting solar panels to a base, wherein the device (100) comprises a lower part (200) and an upper part (300), wherein the lower part (200) is arranged for mounting the device (100) to the base, wherein the upper part (300) comprises a main body (330) and a mounting element (310), wherein the main body (330) is connected to the lower part (200), wherein the mounting element (310) is arranged for mounting solar panels to the device (100), **characterized in that** the mounting element (310) is rotatably mounted onto the main body (330).

2. The device (100) according to claim 1, wherein the upper part (300) comprises a releasable connecting element (311, 312) for securing the mounting element (310) in relation to the main body (330).

3. The device (100) according to claim 1 or 2, wherein the mounting element (310) provides a first engagement surface (320), wherein the main body (330) provides a second engagement surface (350), wherein the first engagement surface (320) and the second engagement surface (350) are arranged for mutually engaging the first engagement surface (320) and the second engagement surface (350) according to a first direction (R1), wherein the first engagement surface (320) and the second engagement surface (350) are further arranged for mutually engaging the first engagement surface (320) and the second engagement surface (350) according to a second direction (R2) different from the first direction (R1).

4. The device (100) according to claim 3, wherein one engagement surface (350) among the first engagement surface (320) and the second engagement surface (350) comprises a first series of parallel grooves (351) extending according to the first direction (R1) and a second series of parallel grooves (352) extending according to the second direction (R2), and wherein the other engagement surface (320) among the first engagement surface (320) and the second engagement surface (350) comprises a third series of parallel protrusions (321) extending according to a predetermined direction (B).

5. The device (100) according to claim 3 or 4, wherein the first direction (R1) and the second direction (R2) are perpendicular to each other.

6. The device (100) according to any one of the claims 3-5, wherein the first engagement surface (320) and the second engagement surface (350) are further arranged for mutually engaging the first engagement surface (320) and the second engagement surface (350) according to at least one additional direction different from the first direction (R1) and the second direction (R2).

7. The device (100) according to any one of the claims 3-6, wherein the mounting element (310) comprises a separate first engaging element affixed to the remaining portion of the mounting element (310), wherein the first engagement surface (320) is provided on the first engaging element, and/or wherein the main body (330) comprises a separate second engaging element (340) affixed to the remaining portion of the main body (330), wherein the second engagement surface (350) is provided on the second engaging element (340).

8. The device (100) according to any one of the claims 3-7, wherein one engagement surface (350) among the first engagement surface (320) and the second engagement surface (350) has a lower hardness than the other engagement surface (320) among the first engagement surface (320) and the second engagement surface (350).

9. A method for mounting solar panels to a base by means of the device (100) according to any one of the claims 1-8, wherein the method comprises the following steps:
mounting the device (100) to the base by means of the lower part (200),
rotating the mounting element (310) on the main body (330) to a predetermined direction for mounting the solar panels, and
mounting a solar panel to the mounting element (310).
